# EUROPÄISCHE PATENTSCHRIFT

(11) **EP 0 915 781 B1**
(45) Veröffentlichungstag und Bekanntmachung des Hinweises auf die Patenterteilung: **03.04.2002**
(21) Anmeldenummer: 97939943.3
(22) Anmeldetag: 26.07.1997
(51) Int. Cl.: B60R 16/00

(54) **LENKSTOCKSCHALTER FÜR EIN KRAFTFAHRZEUG**
STEERING COLUMN SWITCH FOR A MOTOR VEHICLE
COMMUTATEUR FIXE A LA COLONNE DE DIRECTION D'UN VEHICULE

(30) Priorität: 02.08.1996 DE 19631208
(43) Veröffentlichungstag der Anmeldung: 19.05.1999
(73) Patentinhaber: Delphi Technologies, Inc., Troy, MI 48084 (US)
(72) Erfinder: RUDOLPH, Gerd, D-55459 Aspisheim (DE); LULEY, Reiner, D-55129 Mainz (DE); LEUSCHNER, Markus, D-55595 Bretzenheim (DE)
(74) Vertreter: Becker, Bernd, Dipl.-Ing.
(86) Internationale Anmeldenummer: DE9701605
(87) Internationale Veröffentlichungsnummer: WO9805533

(56) Entgegenhaltungen:
- EP-A- 0 389 366
- EP-A- 0 426 538
- EP-A- 0 446 126
- EP-A- 0 577 499
- US-A- 5 272 290

## Beschreibung

Die Erfindung bezieht sich auf einen Lenkstockschalter eines Kraftfahrzeuges mit einem Blinkerschalter, in dessen Schalthebel ein Dreh-Lichtschalter mit einem Drehgriff für Standlicht und Fahrtlicht integriert ist, dem mindestens eine Nebellicht- und/oder Nebelschlußlichtschaltstellung zugeordnet ist.

Lenkstockschalter werden üblicherweise an der Lenksäule des Kraftfahrzeuges derart befestigt, daß der Lenkstockschalter radial zur Lenksäule an deren Mantelrohr angebracht ist, wodurch bei Betatigung des Lenkrades und damit der im Mantelrohr geführten Lenksäule der Lenkstockschalter gegenüber dem Lenkrad unbeweglich ist. Der Lenkstockschalter nimmt in der Regel einen Blinkerschalter für die Fahrtrichtungsanzeige und einen Lichtschalter für Standlicht und Fahrtlicht des Kraftfahrzeugesauf, wobei häufig der als Dreh-Lichtschalter ausgebildete Lichtschalter in den Schalthebel des Blinkerschalters umgebaut ist.

Meistens sind im Armaturenbrett oder in der Mittelkonsole des Kraftfahrzeuges zusätzliche Betätigungsschalter für das Nebellicht und das Nebelschlußlicht vorgesehen. Somit werden die Schaltfunktionen für die am Kraftfahrzeug vorhandenen Nebelleuchten getrennt von den Schaltfunktionen "Aus", "Standlicht" und "Fahrtlicht" des Lichtschalters für die Scheinwerfer geschaltet. Dies ist insofern nachteilig, als sich der Nebellichtschalter und/oder Nebelschlußlichtschalter relativ weit entfernt im Bedienungsbereich des Kraftfahrzeugfühers befindet. Darüber hinaus ist eine separate aufwendige und kostenintensive Ausbildung und Verkabelung des Nebellichtschalters und/oder Nebelschlußlichtschalters erforderlich. Es ist vielmehr wünschenswert, den Nebellichtschalter und/oder Nebelschlußlichtschalter im näheren Handhabungsbereich des Kraftfahrzeugführers anzuordnen.

Aus der gattungsgemässen US-A-5 272 290 ist ein Lenkstockschalter eines Kraftfahrzeuges mit einem Blinkerschalter bekannt, in dessen Schalthebel ein Dreh-Lichtschalter für Standlicht und Fahrtlicht integriert ist, wobei dem Dreh-Lichtschalter über eine Zug-Schaltstellung mindestens eine Nebellicht- und/oder Nebelschlußlichtstellung zugeordnet ist.

Es ist Aufgabe der Erfindung, einen Lenkstockschalter der eingangs genannten Art zu schaffen, dessen Dreh-Lichtschalter zusätzlich ein taktil erkennbares Ein- und Ausschalten der Kebellicht- bzw. Nebelschlußlichtleuchte an einem Kraftfahrzeug ermöglicht, wobei dieser einfach und kostengünstig herstellbar sowie leicht bedienbar sein soll.

Erfindungsgemäß wird die Aufgabe dadurch gelöst, daß den Schaltstellungen für "Aus", Standlicht" und "Fahrtlicht" in Betätigungsrichtung des Dreh-Lichtschalters die Schaltstellung für "Nebellicht" und/oder "Nebelschlußlicht" nachgeordnet ist, wobei zum Betätigen des Dreh-Lichtschaiters in die Schaltstellung "Nebellicht" bzw. "Nebelschluß-licht" ein größerer Kraftaufwand erforderlich ist als für die anderen Schaltstellungen.

Durch diese Maßnahmen ist neben den Funktionen "Aus", "Standlicht" und "Fahrtlicht" auch die Nebellicht- bzw. Nebelschlußlicht-Funktion im Dreh-Lichtschalter realisiert, ohne daß zusätzliche Betätigungsorgane angeordnet bzw. betätigt werden müssen. Der erfindungsgemäße Lenkstockschalter erfordert keinen besonders erhöhten zusätzlichen Bauaufwand zur Aufnahme des Nebellicht- bzw. Nebelschlußlichtschalters, da dessen Funktionselemente vollständig im Dreh-Lichtschalter untergebracht sind. Der Lenkstockschalter mit den zusätzlichen Funktionen "Nebellicht" und/oder "Nebelschlußlicht" ist ohne größeren Aufwand leicht und kostengünstig herstellbar, wobei der fertigungstechnische Vorteil besonders in der Ausbildung des Dreh-Lichtschalters mit integriertem Nebellicht-bzw. Nebelschlußlichtschalter als eine Baueinheit zu sehen ist. Im weiteren sind die Schaltstellungen "Aus", "Standlicht", "Fahrtlicht" und "Nebellicht" bzw. "Nebelschlußlicht" in chronologischer Folge aktivierbar. Die Funktionen "Nebellicht" bzw. "Nebelschlußlicht" werden am wenigsten benötigt, nämlich nur dann, wenn auf Grund schlechter Sicht durch Nebel die Zuschaltung der Nebelleuchten bzw. Nebelschlußleuchten erforderlich ist, daher ist diese Schaltstellung am Ende des Schaltzyklusses des Dreh-Lichtschalters angeordnet. Sonach ist ein Ausschalten des Nebellichtes bzw. Nebelschlußlichtes mit dem Ausschalten des Fahrtlichtes gewährleistet. Ferner wird durch das Erfordernis des größeren Kraftaufwandes bei der Betätigung des Dreh-Lichrschalters in die Schaltstellung "Nebellicht" bzw. "Nebel-Schlußlicht" gegenüber den Schaltstellungen "Aus", "Standlicht" bzw. "Fahrtlicht" das Ein- und Ausschalten der Nebellichtleuchten bzw der Nebelschlußlichtleuchten für den Kraftfahrzeugführer taktil erkennbar. Durch das Aufwenden einer größeren Kraft zum Erreichen der Schaltstellung "Nebellicht" bzw. "Nebelschlußlicht" wird vermieden, daß versehentlich die Nebellichtleuchte bzw. Nebelschlußlichtleuchte am Kraftfahrzeug angeschaltet wird. Wenn eine Situation entsteht, in der entsprechend den Witterungsverhältnissen kein Nebel mehr vorhanden ist, wird der Dreh-Lichtschalter in die Schaltsrellungen "Fahrtlicht", "Standlicht" oder "Aus" gedreht, wodurch automatisch die Schaltstellung "Nebellicht" bzw. "Nebelschluß-licht" mit ausgeschaltet wird. Ein versehentliches Weiterleuchten der Nebelleuchte bzw. Nebelschlußleuchte wird dadurch vermieden.

In Ausbildung des Erfindungsgedankens ist im Inneren eines Gehäuses des Schalthebels ein gegen dieses abgestütztes Rastelement angeordnet, das mit einer am Innenumfang des Drehgriffes des Dreh-Lichtschalters ausgebildeten Rastkulisse in Rasteingriff bringbar ist. Dadurch liegen die Schaltstellungen "Aus", "Standlicht", "Fahrtlicht" und "Nebellicht" bzw. "Nebelschlußlicht" in gegeneinander abgestufter Weise vor. Zweckmäßigerweise stützt sich das Rastelement mit einer Druckfeder belastet gegen das Innere des Gehäuses ab und ragt durch eine im Gehäuse ausgebildete Durchtrittsöffnung. Die Druckfeder sorgt für den nötigen Anpreßdruck des Rastelementes gegen die Rastkulisse, der durch das Hindurchragen des Rastelementes durch die Durchtrittsöffnung übertragen wird.

Damit die Schaltstellungen "Aus", "Standlicht", "Fahrtlicht" und "Nebellicht" bzw. "Nebelschlußlicht" in der angegebenen Reihenfolge geschaltet werden können, ist bevorzugt die Rastkulisse im Dreh-Lichtschalter aus einer aus mehreren nebeneinander angeordneten Rastkurventeilen bestehenden Rastkurvenbahn gebildet. Hierbei sind die beiden ersten Rastkurventeile den Schaltstellungen "Stand-licht" und "Fahrtlicht" zugeordnet, während das weitere Rastkurventeil der Schaltstellung "Nebellicht" bzw. "Nebelschluß-licht" zugeordnet ist.

Darüber hinaus weisen die beiden ersten Rastkurventeile eine im wesentlichen gleichschenklige Dreiecksform auf, die für die Schaltstellungen "Standlicht" und "Fahrtlicht" vorgesehen sind. Durch normalen Kraftaufwand des Kraftfahrzeugführers beim Drehen des Drehgriffes des Dreh-Lichtschalters überwindet das Rastelement die gleichschenkligen dreieckförmigen Rastkurvenbahnteile und schaltet die zugehörigen Schaltstellungen. Das Rastkurventeil für die Schaltstellung "Nebellicht" bzw. "Nebelschlußlicht" hingegen besitzt eine ungleichschenklige Dreiecksform, wobei der vordere Schenkel über einen steileren Verlauf verfügt als der hinteree Schenkel. Dadurch passiert das Rastelement den steiler verlaufenden Schenkel des ungleichschenkligen dreieckförmigen Rastkurvenbahnteils schwergängiger, so daß bei der Ausführung der Drehbewegung des Dreh-Lichtschalters ein größerer Kraftaufwand erforderlich ist als für die gleichschenkligen dreieckförmigen Rastkurvenbahnteile für die Schaltstellungen "Standlicht" und "Fahrtlicht". Hierdurch ist der Kraftfahrzeugführer in der Lage zu erkennen, daß er in die Schaltstellung "Nebellicht" bzw. "Nebelschlußlicht" überwechselt wobei ihm gegebenenfalls einen versehentlichen Schaltstellungswechsel signalisiert wird.

Bei einer alternativen Ausführung der Erfindung ist vor dem Betätigen des Dreh-Lichtschalters in die Schaltstellung "Nebellicht" bzw. "Nebelschullicht" eine Verriegelungseinrichtung durch Ziehen oder Drücken des Drehgriffes des Dreh-Lichtschalters zu hören. Somit kann erst nach Aufhebung der Verriegelung der Drehgriff in die Schaltstellung "Nebellicht" bzw. "Nebelschlußlicht" gedreht werden.

Um eine einfache Handhabbarkeit des Dreh-Lichtschalters zu gewährleisten, ist der Dreh-Lichtschalter am äußeren Ende des Schalthebels des Blinkerschalters angeordnet. Dadurch ist der Dreh-Lichtschalter für den Kraftfahrzeugführer leicht erreichbar und auf kurze Distanz zu bedienen.

Zur einfachen Begrenzung der Drehbewegung des Drehgriffes des Dreh-Lichtschalters ist bevorzugt am Gehäuse des Schalthebels ein mit einem verdichten Bereich versehenes Schalterteil ausgebildet, und die Innenumfangswand des Drehgriffes weist zwei Anschläge auf, die mit dem verdichten Bereich des Schalterteils in Eingriff bringbar sind. Die Anschläge sind sich deametral gegenüberliegend an der Innenumfangswand des Drehgriffes angeordnet.

Zeckmäßigerweise weist der Drehgriff des Dreh-Lichtschalter zumindest ein als Handhabungshilfe ausgebildetes Betätigungselement auf.

Bevorzugt ist in die freie Stirnseite des Dreh-Lichtschalters ein Drucktasten-Schalter für eine weitere Schaltfunktion eingesetzt. Der Drucktasten-Schalter kann beispielsweise zum Ein- und Ausschalten des Fernlichtes dienen.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im folgenden an einem Ausführungsbeispiel unter Bezugnahme auf die zugehörigen Zeichnungen näher erläutert. Es zeigt:
- Fig. 1: eine Explosivdarstellung des Schalthebels des Blinkerschalters mit integriertem Dreh-Lichtschalter des erfindungsgemäßen Lenkstockschalters

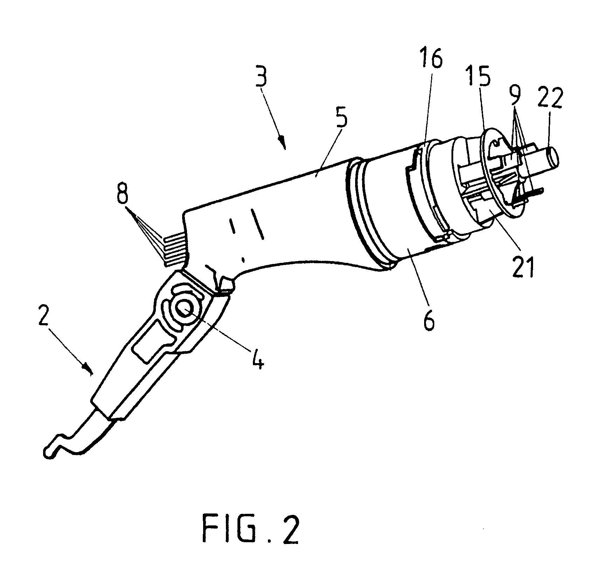

- Fig. 2: eine Perspektivansicht eines Teilbereiches des Schalthebels nach Fig. 1,

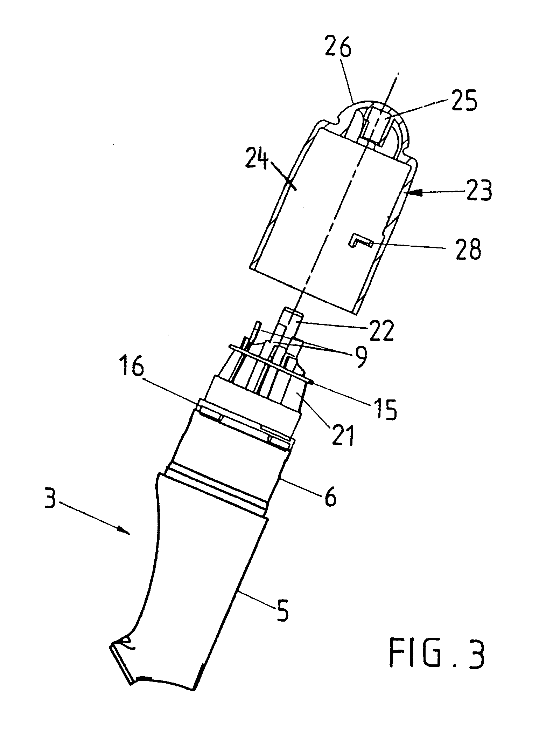

- Fig. 3: eine Explosivdarstellung eines Teilbereiches des Schalthebels mit geschnittenem Drehgriff des Dreh-Lichtschalters in einer Seitenansicht nach Fig. 1,
- Fig. 4: eine Perspektivansicht nach Fig. 3,
- Fig. 5: eine Perspektivansicht eines weiteren Teilbereiches des Schalthebels nach den Fig. 1 bis 4,

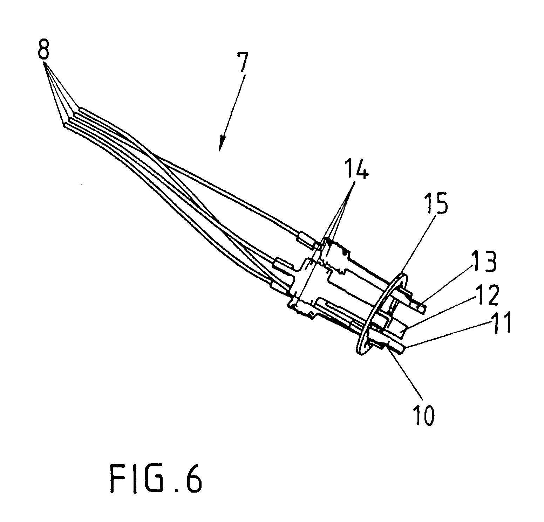

- Fig. 6: eine Perspektivansicht auf die elektrischen Bauteile des Schalthebels,
- Fig. 7: eine Längsschnittansicht durch den Drehgriff des Dreh-Lichtschalters gemäß den Fig. 1, 3 und 4 und
- Fig. 8: eine Ansicht auf den Drehgriff in Richtung des Pfeiles VIII nach Fig. 7.

Ein Schalthebel 1 eines nicht dargestellten, in einen Lenkstockschalter eines Kraftfahrzeuges integrierten Blinkerschalters ist über eine Lagerstelle 4 schwenkbar in Richtung des Pfeiles A an dem Blinkerschalter festgelegt. Der in den Blinkerschalter hineinragende Bereich des Schalthebels 1 nimmt stirnseitig ein druckfederbelastetes Rastelement 2 auf, das mit einer nicht dargestellten Rastkurve zur Festlegung der Schaltstellungen des Schalthebels 1 zusammenwirkt. Der Schalthebel 1 weist ein Gehäuse 3 auf, das im wesentlichen aus einem Aufnahmekörper 5 und einem darauf anbringbaren Aufsetzkörper 6 besteht. Innerhalb des Aufnahmekörpers 5 und des Aufsetzkörpers 6 befindet sich ein Kabelsatz 7 mit Schaltkontakten, dessen Kabel 8 am rückwärtigen Ende des Aufnahmekörpers 5 zu einer elektrischen Steuereinheit des Kraftfahrzeuges herausgeführt werden.

An den vorderen Enden der Kabel 8 sind jeweils Schaltkontakte 9 vorgesehen, nämlich ein Schaltkontakt 10 für die Schaltstellung "Aus", ein Schaltkontakt 11 für die Schaltstellung "Standlicht", ein Schaltkontakt 12 für die Schaltstellung "Fahrtlicht" und ein Schaltkontakt 13 für die Schaltstellung "Nebellicht" bzw. "Nebelschlußlicht" eines endseitig am Schalthebel 1 angeordneten Dreh-Lichtschalters 23. Die Schaltkontakte 10 bis 13 sind als Kabelschuhe 14 ausgebildet. Die Schaltkontakte 10 bis 13 werden über einen Schaltkontaktring 15 festgelegt, der am Aufsetzkörper 6 des Gehäuses 3 arretiert wird.

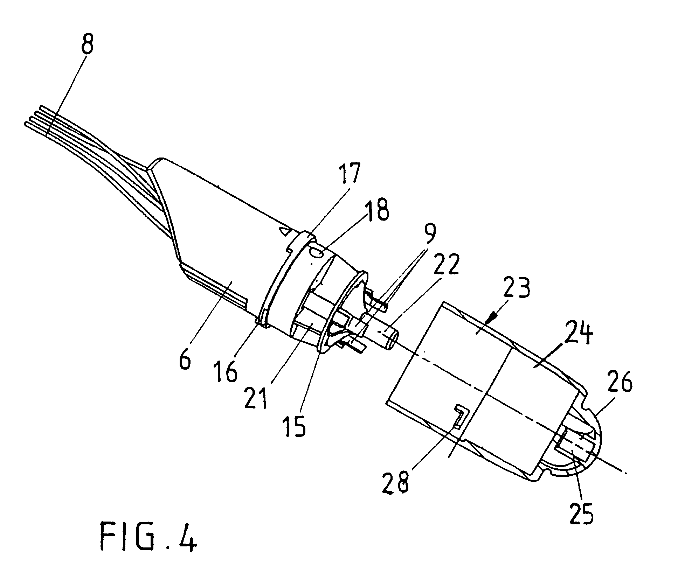

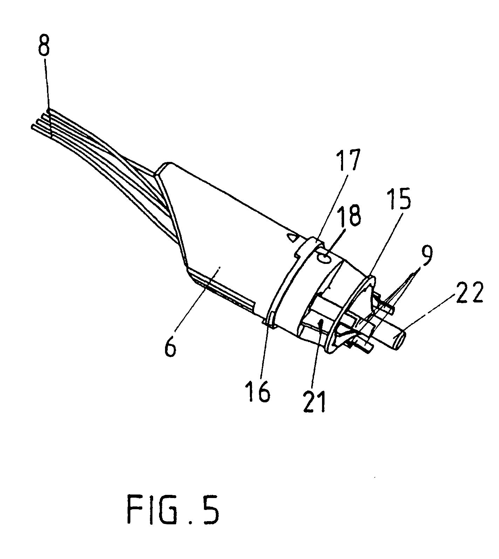

Der Aufsetzkörper 6 ist umfangsseitig mit einem ringförmigen Schulterteil 16 versehen, das an einem Teil seines Umfanges einen verdickten Bereich 17 aufweist. Weiterhin ist in den Aufsetzkörper 6 gemäß den Fig. 4 und 5 eine Durchtrittsöffnung 18 für ein sich im Inneren des Aufsetzkörpers 6 abstützendes Rastelement 19 eingebracht. An diesem Rastelement 19 ist an seinem Abstützende eine Druckfeder 20 angeordnet, welche diesen durch die Durchtrittsöffnung 18 nach außen drückt. Darüber hinaus umfaßt der Aufsetzkörper 6 ein einstückig mit diesem ausgebildetes Aufnahmestück 21, in das der federbelastete Stößel 22 eines in den Dreh-Lichtschalter 23 integrierten Drucktasten-Schalters 26 aufgenommen ist, der zum Ein- und Ausschalten des Fernlichtes dient.

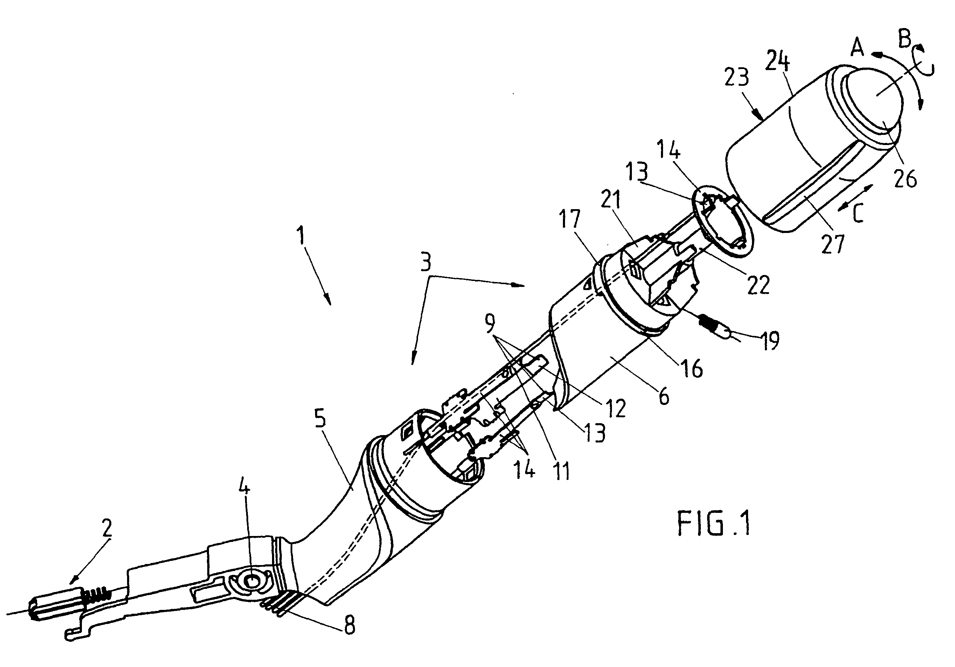

.Der Dreh-Lichtschalter 23 ist im montierten Zustand des Schalthebels 1 auf den Aufsetzkörper 6 des Gehäuses 3 aufgesteckt und überdeckt hierbei das ringförmige Schulterteil 16. Der Dreh-Lichtschalter 23 weist einen Drehgriff 24 auf, der in Pfeilrichtung B gemäß Fig. 1 drehbar ist. In ein Aufnahmeteil 25 des Drehgriffes 24 greift der Stößel 22 ein. Weiterhin der Drehgriff 24 außenseitig sich diametral gegenüberliegende Betätigungselemente 27 auf, die als Bedienungshilfe vorgesehen sind.

An der Innenumfangswand des Drehgriffes 24 sind zwei sich diametral gegenüberliegende Anschläge 28 angeformt. Diese Anschläge 28 sind bei einer Drehbewegung des Drehgriffes 24 zum Anschlag an die Kanten des verdickten Bereiches 17 des Schulterteils 16 am Aufsetzkörper 6 vorgesehen, wodurch die Drehbewegung des Drehgriffes 24 begrenzt wird.

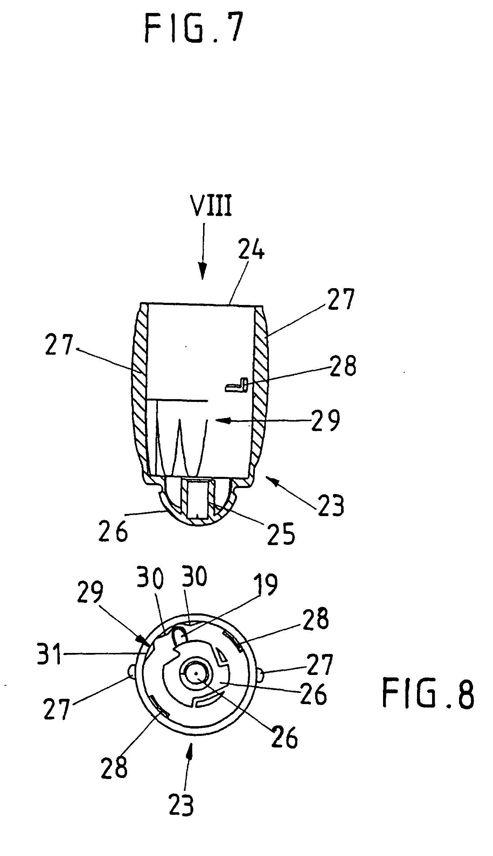

In einem Bereich zwischen den beiden Anschlägen 28 ist ebenfalls an der Innenumfangswand des Drehgriffes 24 eine Rastkulisse 29 ausgebildet. Über den Bahnverlauf der Rastkulisse 29 wird das mit der Druckfeder 20 federbelastete und sich im Inneren des Aufsetzkörpers 6 abstützende Rastelement 19 geführt, wie dies aus Fig. 8 hervorgeht. Die jeweiligen Vertiefungen in der Rastkulisse 29 sind jeweils für eine der Schaltstellungen "Aus" 10, "Standlicht" 11, "Fahrtlicht" 12 sowie "Nebellicht" bzw. "Nebelschlußlicht" 13 des Dreh-Lichtschalters 23 vorgesehen. Durch die Vertiefungen und Erhöhungen der Rastkulisse 29 werden somit die jeweiligen Schaltstellungen realisiert, wobei durch die im wesentlichen dreieckförmige Ausbildung der Rastkurvenbahn eine fühlbare Schaltbetätigung erzeugt wird. Für die Schaltstellungen "Standlicht" 11 und "Fahrtlicht" 12 sind die Rastkurventeile 30 im wesentlichen mit einer gleichschenkligen Dreieckform versehen, so daß diese Schaltstellungen durch einen normalen Kraftaufwand beim Drehen des Dreh-Lichtschalters 23 erreicht werden. Der In Fig. 8 linksseitig angeordnete Rastkurventeil 31 hingegen ist als ungleichschenkliges Dreieck ausgebildet, wobei der vordere Schenkel einen steileren Verlauf besitzt als der hintere Schenkel. Dadurch ist ein erhöhter Kraftaufwand zum Betätigen des Dreh-Lichtschalters 23 zum Einschalten des Nebellichtes bzw. Nebelschlußlichtes erforderlich, da das federbelastete Rastelement 19 erst den steileren Schenkelbereich des Rastkurventeils 31 überwinden muß.

## Patentansprüche

1. Lenkstockschalter eines Kraftfahrzeuges mit einem Blinkerschalter, in dessen Schalthebel (1) ein Dreh-Licht-schalter (23) mit einem Drehgriff (24) für Standlicht und Fahrtlicht integriert ist, dem mindestens eine Nebellicht- und/oder Nebelschlußlichtschaltstellung (13) zugeordnet ist, **dadurch gekennzeichnet, daß** den Schaltstellungen für "Aus" (10), "Standlicht" (11) und "Fahrtlicht" (12) in Betätigungsrichtung des Dreh-Lichtschalters (23) die Schaltstellung (13) für "Nebellicht" und/oder "Nebelschlußlicht" nachgeordnet ist, wobei zum Betätigen des Dreh-Lichtschalters (23) in die Schaltstellung "Nebellicht" bzw. "Nebelschlußlicht" (13) ein größerer Kraftaufwand erforderlich ist als für die anderen Schaltstellungen (10, 11, 12).

2. Lenkstockschalter nach Anspruch 1, **dadurch gekennzeichnet, daß** im Inneren eines Gehäuses (3) des Schalthebels (1) ein gegen dieses abgestutztes Rastelement (19) angeordnet ist, das mit einer am Innenumfang des Drehgriffes (24) des Dreh-Lichtschalters (23) ausgebildeten Rastkulisse (29) in Rasteingriff bringbar ist.

3. Lenkstockschalter nach Anspruch 2, **dadurch gekennzeichnet, daß** sich das Rastelement (19) mit einer Druckfeder (20) belastet gegen das Innere des Gehäuses (3) abstützt und durch eine im Gehäuse (3) ausgebildete Durchtrittsöffnung (18) ragt.

4. Lenkstockschalter nach den Ansprüchen 2 und 3, **dadurch gekennzeichnet, daß** die Rastkulisse (29) im Dreh-Licht-schalter (23) aus einer aus mehreren nebeneinander angeordneten Rastkurventeilen (30,31) bestehenden Rastkurvenbahn gebildet ist.

5. Lenkstockschalter nach Anspruch 4, **dadurch gekennzeichnet, daß** die beiden ersten Rastkurventeile (30) den Schaltstellungen "Standlicht" (11) und "Fahrtlicht" (12) zugeordnet sind.

6. Lenkstockschalter nach den Ansprüchen 4 und 5, **dadurch gekennzeichnet, daß** die Rastkurventeile (30) eine im wesentlichen gleichschenklige Dreiecksform aufweisen.

7. Lenkstockschalter nach Anspruch 4, **dadurch gekennzeichnet, daß** das weitere Rastkurventeil (31) der Schaltstellung "Nebellicht" bzw. "Nebelschlußlicht" (13) zugeordnet ist.

8. Lenkstockschalter nach Anspruch 7, **dadurch gekennzeichnet, daß** das Rastkurventeil (31) eine ungleichschenklige Dreiecksform aufweist, wobei der vordere Schenkel einen steileren Verlauf besitzt als der hintere Schenkel.

9. Lenkstockschalter nach Anspruch 1, **dadurch gekennzeichnet, daß** vor dem Betätigen des Dreh-Lichtschalters (23) in die Schaltstellung "Nebellicht" bzw. "Nebelschlußlicht" (13) eine Verriegelungseinrichtung durch Ziehen oder Drücken des Drehgriffes (24) des Dreh-Lichtschalters (23) zu lösen ist.

10. Lenkstockschalter nach Anspruch 7, **dadurch gekennzeichnet, daß** der Dreh-Lichtschalter (23) am äußeren Ende des Schalthebels (1) des Blinkerschalters angeordnet ist.

11. Lenkstockschalter nach einem der Ansprüche 1 bis 10, **dadurch gekennzeichnet, daß** am Gehäuse (3) des Schalthebels (1) ein mit einem verdickten Bereich (17) versehenes Schulterteil (16) ausgebildet ist, und die Innenumfangswand des Drehgriffes (24) Anschläge (28) aufweist, die mit dem verdickten Bereich (17) des Schulterteils (16) in Eingriff bringbar sind.

12. Lenkstockschalter nach Anspruch 11, **dadurch gekennzeichnet, daß** die Anschläge (28) sich diametral gegenüberliegend an der Innenumfangswand des Drehgriffes (24) angeordnet sind.

13. Lenkstockschalter nach einem der Ansprüche 1 bis 12, **dadurch gekennzeichnet, daß** der Drehgriff (24) des Dreh-Lichtschalters (23) zumindest ein als Handhabungshilfe ausgebildetes Betätigungselement (27) aufweist.

14. Lenkstockschalter nach einem der Ansprüche 1 bis 13, **dadurch gekennzeichnet, daß** in die freie Stirnseite des Dreh-Lichtschaiters (23) ein Drucktasten-Schalter (26) für eine weitere Schaltfunktion eingesetzt ist.

## Claims

1. Steering column switch for an automotive vehicle, having a flasher switch, a rotary light switch (23) being incorporated in the switching lever (1) of said flasher switch and being provided with a rotary handle (23) for parking light and headlight, at least one fog light and/or fog tail light switching position (13) being associated with said handle, **characterised in that** the switching position (13) for "fog light" and/or "fog tail light" is disposed downstream of the switching positions for "off" (10), "parking light" (11) and "headlight" (12), when viewed with respect to the actuating direction of the rotary light switch (23), a greater force being required to actuate the rotary light switch (23) into the switching position "fog light" or respectively "fog tail light" (13) than is required for the other switching positions (10, 11, 12).

2. Steering column switch according to claim 1, **characterised in that** a locking element (19), which is supported against the switching lever (1), is disposed in the interior of a housing (3) of said lever and can be brought into locking engagement with a locking slide member (29), which is provided on the internal periphery of the rotary handle (24) of the rotary light switch (23).

3. Steering column switch according to claim 2, **characterised in that** the locking element (19) is supported against the interior of the housing (3) when loaded with a compression spring (20) and protrudes through a through-aperture (18) provided in the housing (3).

4. Steering column switch according to claims 2 and 3, **characterised in that** the locking slide member (29) in the rotary light switch (23) is formed from a locking profile path, which comprises a plurality of locking profile portions (30, 31) disposed adjacent one another.

5. Steering column switch according to claim 4, **characterised in that** the first two locking profile portions (30) are associated with the switching positions "parking light" (11) and "headlight" (12).

6. Steering column switch according to claims 4 and 5, **characterised in that** the locking profile portions (30) are in the form of a substantially equal-sided triangle.

7. Steering column switch according to claim 4, **characterised in that** the additional locking profile portion (31) is associated with the switching position "fog light" or respectively "fog tail light" (13).

8. Steering column switch according to claim 7, **characterised in that** the locking profile portion (31) is in the form of an unequal-sided triangle, the front leg being steeper than the rear leg.

9. Steering column switch according to claim 1, **characterised in that**, prior to actuating the rotary light switch (23) into the switching position "fog light" or respectively "fog tail light" (13), a locking means needs to be released by pulling or pushing the rotary handle (24) of the rotary light switch (23).

10. Steering column switch according to claim 7, **characterised in that** the rotary light switch (23) is disposed on the outer end of the switching lever (1) of the flasher switch.

11. Steering column switch according to one of claims 1 to 10, **characterised in that** a shoulder portion (16), which is provided with a thickened region (17), is provided on the housing (3) of the switching lever (1), and the internal peripheral wall of the rotary handle (24) has stop members (28), which can be brought into engagement with the thickened region (17) of the shoulder portion (16).

12. Steering column switch according to claim 11, **characterised in that** the stop members (28) are disposed on the internal peripheral wall of the rotary handle (24) in a diametrically opposed manner.

13. Steering column switch according to one of claims 1 to 12, **characterised in that** the rotary handle (24) of the rotary light switch (23) has at least one actuating element (27), which is configured as an operational aid.

14. Steering column switch according to one of claims 1 to 13, **characterised in that** a push-button switch (26) for an additional switching function is inserted into the free end face of the rotary light switch (23).

## Revendications

1. Commutateur de colonne de direction d'un véhicule automobile comportant un interrupteur de clignotant dans le levier de commande (1) duquel est intégré un commutateur de phares tournant (23) avec une poignée tournante (24) pour feux de position et feux de route, auquel est affecté au moins une position de commande de phares anti-brouillard avant et/ou de phares anti-brouillard arrière (13), **caractérisé en ce que** derrière les positions de commande pour "arrêt" (10), "feux de position" (11) et "feux de route" (12) est disposée, dans le sens d'actionnement du commutateur tournant de phares (23), la position de commande (13) pour "phares anti-brouillard avant" et/ou "phares anti-brouillard arrière", l'application d'une force plus grande que pour les autres positions de commande (10, 11, 12) étant nécessaire pour actionner le commutateur tournant de phares (23) dans la position de commande "phares anti-brouillard avant" ou "phares anti-brouillard arrière" (13).

2. Commutateur de colonne de direction selon la revendication 1, **caractérisé en ce qu'**à l'intérieur d'un boîtier (3) du levier de commande (1) est disposé un élément d'encliquetage (19), soutenu par ce dernier et qui peut être amené en engagement d'encliquetage avec une coulisse d'encliquetage (29) formée sur le pourtour intérieur de la poignée tournante (24) du commutateur tournant de phares (23).

3. Commutateur de colonne de direction selon la revendication 2, **caractérisé en ce que** l'élément d'encliquetage (19) est soutenu, sollicité par un ressort de compression (20), contre l'intérieur du boîtier (3) et traverse une ouverture de passage (18) formée dans le boîtier (3).

4. Commutateur de colonne de direction selon les revendications 2 et 3, **caractérisé en ce que** la coulisse d'encliquetage (29) dans le commutateur tournant de phares (23) est formée par un chemin de came d'encliquetage constitué de plusieurs parties de came d'encliquetage (30, 31) juxtaposées.

5. Commutateur de colonne de direction selon la revendication 4, **caractérisé en ce que** les deux premières parties de came d'encliquetage (30) sont affectées aux positions de commande "feux de position" (11) et "feux de route" (12).

6. Commutateur de colonne de direction selon les revendications 4 et 5, **caractérisé en ce que** les parties de came d'encliquetage (30) présentent sensiblement la forme d'un triangle isocèle.

7. Commutateur de colonne de direction selon la revendication 4, **caractérisé en ce que** l'autre partie de came d'encliquetage (31) est affectée à la position de commande "phares anti-brouillard avant" ou "phares anti-brouillard arrière" (13).

8. Commutateur de colonne de direction selon la revendication 7, **caractérisé en ce que** la partie de came d'encliquetage (31) présente la forme d'un triangle non isocèle, le côté avant présentant une pente plus raide que le côté arrière.

9. Commutateur de colonne de direction selon la revendication 1, **caractérisé en ce qu'**avant d'actionner le commutateur tournant de phares (23) dans la position de commande "phares anti-brouillard avant" ou "phares anti-brouillard arrière" (13), il faut dégager un dispositif de verrouillage en tirant ou en poussant la poignée tournante (24) du commutateur tournant de phares (23).

10. Commutateur de colonne de direction selon la revendication 7, **caractérisé en ce que** le commutateur tournant de phares (23) est disposé à l'extrémité extérieure du levier de commande (1) de l'interrupteur de clignotant.

11. Commutateur de colonne de direction selon l'une des revendications 1 à 10, **caractérisé en ce que** sur le boîtier (3) du levier de commande (1) est formé un épaulement (16) pourvu d'une zone surépaissie (17), et la paroi périphérique intérieure de la poignée tournante (24) présente des butées (28) qui peuvent être amenées en engagement avec la zone surépaissie (17) de l'épaulement (16).

12. Commutateur de colonne de direction selon la revendication 11, **caractérisé en ce que** les butées (28) sont disposées diamétralement opposées sur la paroi périphérique intérieure de la poignée tournante (24).

13. Commutateur de colonne de direction selon l'une des revendications 1 à 12, **caractérisé en ce que** la poignée tournante (24) du commutateur tournant de phares (23) comporte au moins un élément d'actionnement (27) conformé en aide de manipulation.

14. Commutateur de colonne de direction selon l'une des revendications 1 à 13, **caractérisé en ce que** dans le côté frontal libre du commutateur tournant de phares (23) est inséré un commutateur à bouton-poussoir (26) pour une autre fonction de commande.
